Europäisches Patentamt

European Patent Office

Office européen des brevets

(19)

(11) Veröffentlichungsnummer: **0 298 262 B1**

# EUROPÄISCHE PATENTSCHRIFT

(12)

(45) Veröffentlichungstag der Patentschrift:
28.08.91 Patentblatt 91/35

(51) Int. Cl.$^5$: **G01B 21/02**

(21) Anmeldenummer: **88109117.7**

(22) Anmeldetag: **08.06.88**

(54) Höhenmessgerät.

(30) Priorität: **11.06.87 DE 3719509**

(43) Veröffentlichungstag der Anmeldung:
**11.01.89 Patentblatt 89/02**

(45) Bekanntmachung des Hinweises auf die
Patenterteilung:
**28.08.91 Patentblatt 91/35**

(84) Benannte Vertragsstaaten:
**CH DE FR GB IT LI SE**

(56) Entgegenhaltungen:
**DE-A- 2 948 712**
**DE-C- 3 109 856**
**US-A- 4 498 241**

(73) Patentinhaber: **Mauser-Werke Oberndorf
GmbH
Teckstrasse 11
W-7238 Oberndorf (DE)**

(72) Erfinder: **Gruhler, Siegfried
Zollerstrasse 10
W-7243 Vöhringen 2 (DE)**

(74) Vertreter: **Hofmann, Gerhard, Dipl.-Ing.
Patentassessor
Stephanstrasse 49
W-8500 Nürnberg (DE)**

## Beschreibung

Die Erfindung betrifft ein Höhenmeßgerät nach den Ausführungen im Oberbegriff von Patentanspruch 1.

Aus der DE-PS 3109856 ist ein Höhenmeßgerät der gattungsgemäßen Art bekannt, bei dem die Meßkraft unabhängig von der Lage der Meßstelle und der auf diese bezogenen Schlittenstellung einstellbar und über den gesamten Meßbereich konstant ist. Um diese Grundbedingungen des bekannten Höhenmeßgerätes zu erreichen, ist dem Antriebsmotor eine Magnetfeldkupplung nachgeschaltet, die ein äußerst konstantes Schlupfmoment aufweist. Sobald der Meßtaster an eine Meßstelle mit einer entsprechenden Meßkraft anliegt, rutscht die Magnetfeldkupplung durch, während der Motor weiterläuft und die Kupplung den Meßtaster an der Meßstelle festhält. Dabei ist die Meßkraft natürlich unabhängig von der Höhenlage der Meßstelle. Zwischen dem Meßschlitten und dem Ständer ist die jeweilige Meßgröße abzulesen.

Die DE 2948712 A1 offenbart einen Schlitten für Längenmeßgeräte, der manuell oder durch einen motorischen Antrieb verschiebbar ist. Innerhalb des Schlittens ist ein Tastschieber relativ zum Schlitten in Grenzen bis gegen einen Anschlag bewegbar. Durch ein oberes und ein unteres Federelement wird auf dem Tastschieber eine veränderbare Vorspannung ausgeübt, wodurch sich zwischen dem Tastschieber und dem Schlittengehäuse eine im wesentlichen konstante Meßkraft ergibt, mit der ein Tastelement an einem Werkstück antastet.

Ausgehend von dem vorgenannten Stand der Technik ist es Aufgabe der Erfindung, ein Höhenmeßgerät der eingangs genannten Art zu schaffen, bei dem ebenfalls die Meßkraft unabhängig von der Lage der Meßstelle und der auf diese bezogenen Schlittenstellung einstellbar und über den gesamten Meßbereich konstant ist, wobei diese Anforderungen durch einfache Mittel und ohne die Nachschaltung einer Kupplung nach dem Antriebsmotor erreichbar sind.

Erfindungsgemäß wird diese Aufgabe bei einem Höhenmeßgerät durch die Merkmale des Kennzeichenteils von Patentanspruch 1 gelöst.

Mit dieser Erfindung wird in sinnvoller Weise die Befestigung des den Meßtaster tragenden Schlittens an dem Antriebselement genutzt und zwischen dem Schlitten und der Befestigung am Antriebselement eine sogenannte Meßkrafterzeugungseinheit eingesetzt. Diese Meßkrafterzeugungseinheit steht mit der Steuerungseinheit des Antriebsmotors in Wirkverbindung. Durch den Einbau der Meßkrafterzeugungseinheit direkt am Meßschlitten kann die dem Antriebsmotor nach dem Stand der Technik nachgeschaltete Magnetfeldkupplung entfallen. Allein durch die Meßkrafterzeugungseinheit und den angeschlossenen Antriebsmotor wird die notwendige konstante Meßkraft des Meßtasters bei Antasten auf eine Meßstelle erzielt. Die Meßkrafterzeugungseinheit wirkt dabei in beide Verfahrrichtungen des Meßschlittens.

Zwischen dem Meßschlitten und dem Antriebselement ist über einen Stößel ein federndes Element eingesetzt. Wird nun beispielsweise das Antriebselement durch Motorkraft des Antriebsmotors nach oben gezogen, so wird bei Antastung des Meßtasters an ein Werkstück in diesem Fall nur die untere Feder in der unteren Gehäusekammer wirksam. Die obere Feder bleibt dabei in völliger Ruhelage. Umgekehrt verhält es sich natürlich, wenn das Antriebselement durch Motorkraft nach unten bewegt wird und dabei auch den Stößel nach unten fährt. Diese einfache und vorteilhafte Wirkungsweise wird durch das etwa mittig angebrachte Trennelement erzielt. Durch die innerhalb eines kleinen axialen Bereiches festziehbare Klemmschraube kann außerdem eine Austarierung des Gewichtes des Meßschlittens durchgeführt werden. Durch die Meßkrafterzeugungseinheit ist eine Antastung des Meßtasters beim Verfahren des Meßschlittens in beide entgegensetzte Richtungen möglich. Durch die eingesetzten Federn wird dabei eine Vorspannung erzielt, die der Meßkraft entspricht. Aus einer vorgespannten Ruhelage heraus ist jeweils bei Antastung eine konstante und auch eine reproduzierbare Meßkraft herstellbar.

Ausgestaltungen und Weiterbildungen der Erfindung sind den abhängigen Ansprüchen zu entnehmen.

Durch die eingesetzten Sensoren werden die Auslenkungen bzw. die Vorspannungen der Federn in der Meßkrafterzeugungseinheit erfaßt. Dies bedeutet, daß die Sensoren die jeweilige Position des Meßschlittens bzw. des Meßtasters erkannt haben und diese Ist-Position dem Antriebsmotor übermitteln. Diese Übermittlung erfolgt durch ein Signal oder einen Befehl unter Zwischenschaltung der Steuerungseinheit. Der Motor bleibt bei Erreichen des Meßtasters auf einer vorgewählten Position mit einer vorgewählten Vorspannung stehen. Über einen Meßkraftregler in der Steuerungseinheit wird der Sollwert der Meßkraft für die Antastung eingegeben. Über einen Drehzahlregler wird der Unterschied zwischen dem Sollwert und dem Istwert korrigiert, wobei der nach dem Soll-Ist-Vergleich anfallende Wert über den Drehzahlregler nachkorrigiert wird. Die Sensoren beobachten also die Bewegung der Feder bzw. des Stößels und geben in einfacher Weise diese Bewegung und damit die jeweilige Vorspannkraft, welche einer bestimmten Meßkraft entspricht, an die Steuerungseinheit weiter, über welche der Antriebsmotor geregelt wird.

In der Steuerungseinheit wird der sogenannte Positionierbetrieb und auch die Regelung auf eine konstante Meßkraft geregelt. Entsprechend der gewählten Geschwindigkeitsvorgabe ergibt sich ein sogenannter Schleppabstand des Meßschlittens mit dem eingesetzten Meßtaster. Beim manuellen Positionieren wird der Drehzahlwert direkt von einem Joystick generiert. Das Regeln auf die Auslenkung der Meßkrafterzeugungseinheit entspricht indirekt der vorgewählten Antast- bzw. Meßkraft.

Bei Überschreitung der Vorspannkraft wird auf Antastbetrieb umgeschaltet.

In der Zeichnung sind Beispiele der Erfindung dargestellt. Es zeigen :

Fig. 1 ein Ausführungsbeispiel eines Höhenmeßgerätes in schematischer Darstellung ;

Fig. 2 einen Antrieb des Höhenmeßgerätes nach Fig. 1 ;

Fig. 3 eine Meßkrafterzeugungseinheit im Schnitt für ein Höhenmeßgerät nach Fig. 1 ;

Fig. 4 eine beispielhafte Schlittenlagerung in perspektivischer Ansicht ;

Fig. 5 das Höhenmeßgerät in schematischer Ansicht mit einem Ausführungsbeispiel einer Steuerungseinheit im Blockschaltbild ;

Fig. 6 das Höhenmeßgerät nach Fig. 5 mit anderer Schaltung ;

Fig. 7 die Einrichtung von Sensoren für die Antastregelung ;

Fig. 8 eine weitere Einrichtung von Sensoren für die Antastregelung ;

Fig. 9 eine dritte Möglichkeit des Einsatzes von Sensoren für die Motorregelung ;

Fig. 10 eine Ansicht auf die Sensoren gemäß dem Pfeil IX in Fig. 8.

Ein Höhenmeßgerät weist einen Ständer 1 mit einer Führung 2 auf. An der Führung 2 ist ein Meßschlitten 3 gelagert, an dem ein Meßtaster 4 starr befestigt ist. Die Meßablesung erfolgt im Regelfall zwischen dem Meßschlitten 3 und dem Ständer 1 bzw. der Führung 2.

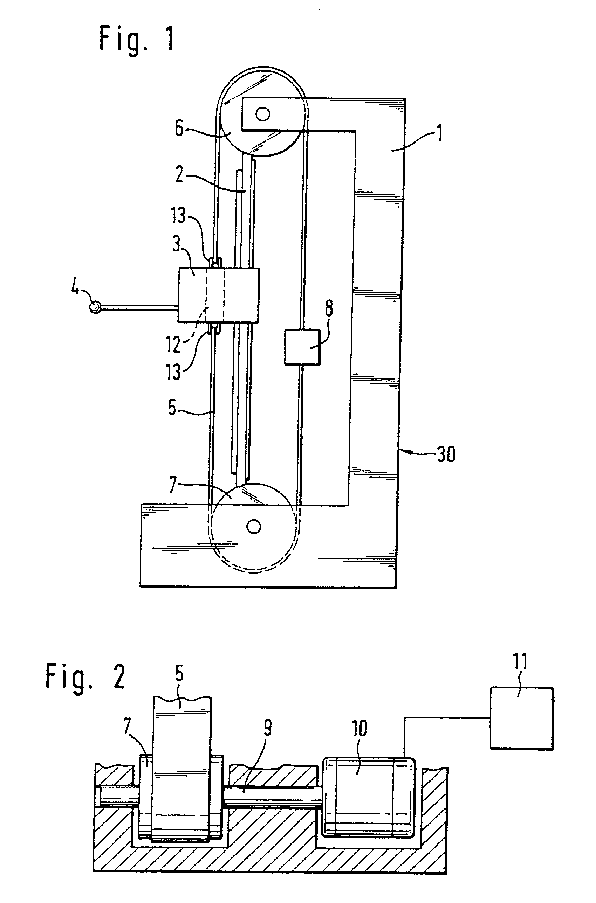

Bei dem gezeigten Ausführungsbeispiel nach Fig. 1 hängt der Schlitten 3 an einem endlosen Stahlband 5, welches über eine obere Umlenkrolle 6 und eine untere Umlenkrolle 7 des Ständers 1 geführt ist. Auf der dem Schlitten 3 entgegengesetzten Seite ist am Stahlband 5 ein Gegengewicht 8 befestigt, dessen Gewicht gleich dem vom Schlitten 3 gemeinsam mit dem Meßtaster 4 ist. Die untere Umlenkrolle 7 wird von einem Getriebe-Elektromotor 10 über die Welle 9 angetrieben. Mit 11 ist die Steuerungseinheit für den Antriebsmotor 10 dargestellt.

An dem Meßschlitten 3 befindet sich die Meßkrafterzeugungseinheit 12, welche einerseits mit dem Meßschlitten 3 fest verbunden ist und andererseits über Befestigungslaschen 13 an dem Stahlband 5 angeschlossen ist.

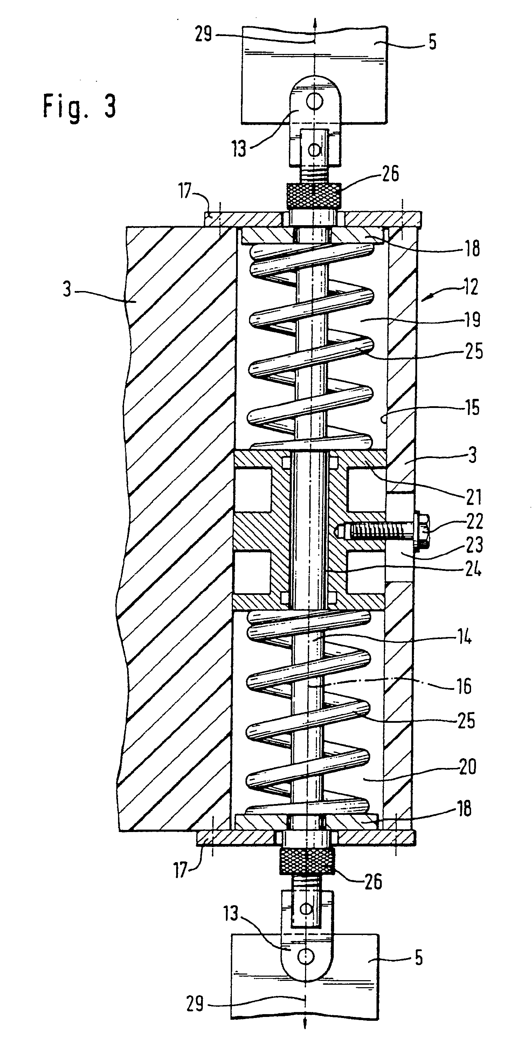

Wie aus Fig. 3 deutlich ersichtbar ist, ist die Meßkrafterzeugungseinheit 12 als Hohlzylinder im Meßschlitten 3 angebracht. Sie wird durch einen Stößel 14 gebildet, welcher auf der Zylinderlängsachse 16 des Gehäuses 15 liegt. Der Stößel 14 ist an seinen beiden aus dem Zylindergehäuse 15 herausragenden Enden mit den Befestigungslaschen 13 für die Anbindung an das umlaufende Stahlband 5 fest angebracht. Das Zylindergehäuse wird zu beiden Stirnseiten durch einen Boden 17 verschlossen, auf dem jeweils im Inneren des Gehäuses ein Ring 18 aufliegt. Das Zylindergehäuse 15 der Meßkrafterzeugungseinheit 12 ist in eine obere Gehäusekammer 19 und eine untere Gehäusekammer 20 unterteilt. Die Teilung erfolgt durch einen Ringkörper 21, der etwa mittig angeordnet ist und zwei im wesentlichen gleich-lange Gehäusekammern 19 und 20 schafft. Die Befestigung des Ringkörpers 21 ist durch eine Klemmschraube 22 vorgenommen, welche durch eine Längsöffnung 23 des Zylindergehäuses 15 in den Ringkörper 21 eingeschraubt ist und innerhalb der Längsöffnung eine Verschiebung des Ringkörpers 21 in axialer Richtung des Stößels 14 erlaubt.

Zwischen dem Ringkörper 21 und dem Stößel ist eine Viskosedämpfung 24 eingesetzt. In die obere Gehäusekammer 19 und in die untere Gehäusekammer 20 sind jeweils Federn 25 vorgesehen, die sich an dem Ring 18 und dem Ringkörper 21 mit ihren Enden abstützen. Außerhalb der Böden 17 des Zylinderhäuses 15 sind zusätzlich Stellmuttern 26 für einen Festanschlag auf den Stößel 14 aufgeschraubt.

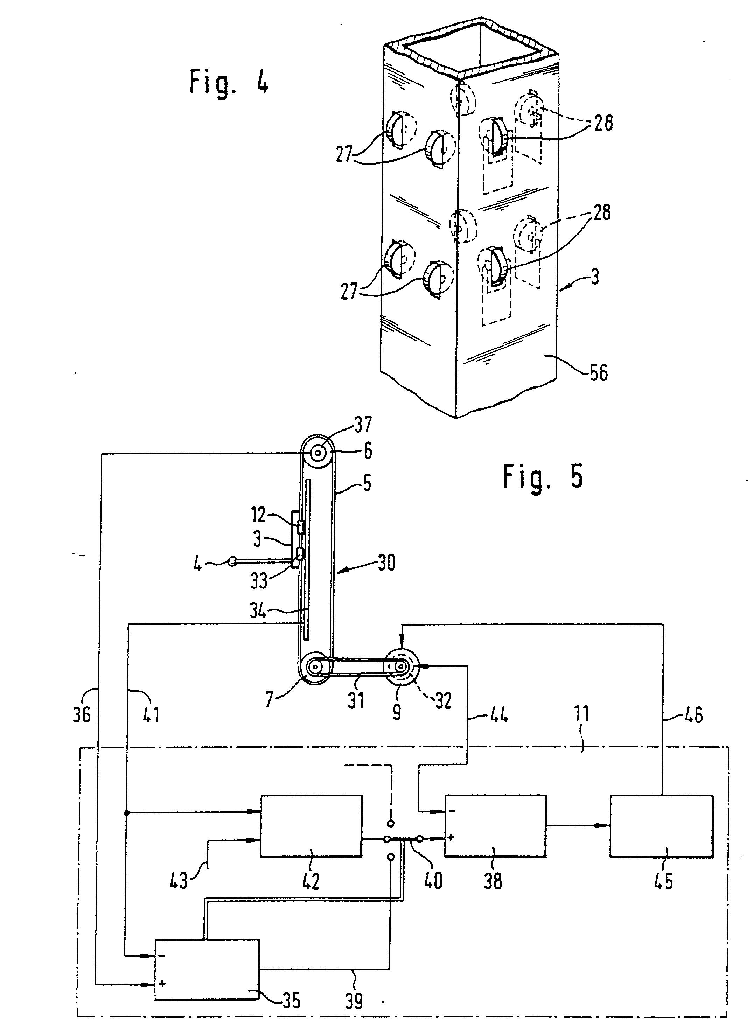

Der Meßschlitten 3 ist bei diesem Ausführungsbeispiel aus einem Kohlefaser-Werkstoff hergestellt. Seine Lagerung erfolgt gemäß der Fig. 4 durch fest eingesetzte Lagerrollen 27 oder alternativ durch angefederte Lagerrollen 28, wodurch eine robuste und werkstattgerechte Führung des Meßschlittens erzielt wird. Das Stahlband ist entsprechend der Bewegungspfeile 29 durch den Antriebsmotor nach oben oder nach unten bewegbar. Durch diese Bewegung wird der Stößel 14 in die gleiche Richtung mitgenommen und mit ihm der fest angeschlossene Meßschlitten mit starr angebautem Meßtaster 4 bewegt. Wird bspw. das Stahlband 5 nach oben bewegt, so fährt der gesamte Meßschlitten 3 mit der Meßkrafterzeugungseinheit 12 solange in die gleiche Richtung mit, bis der Meßtaster 4 an einer Meßstelle eines Meßobjektes zum Anschlag kommt. Dies bedeutet, daß die untere Feder 25 in der unteren Gehäusekammer 20 der Meßkrafterzeugungseinheit 12 gespannt wird, währenddessen die obere Feder 25 in der oberen Gehäusekammer 19 der Meßkrafterzeugungseinheit 12 in völliger Ruhelage bleibt. Diese Vorspannung der Feder 25 entspricht der Meßkraft, mit welcher der Meßtaster 4 an einer Meßstelle anliegt. Die umgekehrten Verhältnisse treten ein, wenn sich das vom Antriebsmotor 10 nach unten gesteuerte Stahlband 5 bewegt und wiederum der Meßtaster 4 zur Anlage an einem Meßobjekt kommt. In diesem Falle würde sich die obere Feder 25 in der oberen Gehäusekammer 19 vorspannen, währenddessen die

EP 0 298 262 B1

untere Feder 25 in der unteren Gehäusekammer 20 in Ruhelage verbleibt.

Durch den axial innerhalb des Bereiches der Längsöffnung 23 einstellbaren Ringkörper 21 ist zusätzlich ein Austarieren des Gewichtes des Meßschlittens 3 möglich.

Figur 5 zeigt das Höhenmeßgerät 30 mit dem Getriebe-Elektromotor 9 in Antriebsverbindung 31 mit der unteren Umlenkrolle 7. Der Getriebemotor ist ferner mit einem Tachometer 32 ausgerüstet. An dem Meßschlitten 3 befindet sich wiederum die Meßkrafterzeugungseinheit 12 und ein Tastkopf 33, welcher mit einem Inkrementalmaßstab 34 zusammenwirkt. Die obere Umlenkrolle 6 mit Drehgeber 37 und der Inkrementalmaßstab 34 sind mit einem Meßkraftregler 35 bzw. 60 durch die Leitungen 36 und 41 verbunden. Über diesen Meßkraftregler 35 in der Steuerungseinheit 11, der als eine digitale Schaltung mit Digital-Analog-Ausgang ausgebildet ist und mit geringem Hardwareaufwand als Mikroprozessorlösung ausgeführt werden kann, wird der Sollwert einer Meßkraft für die Antastung des Meßtasters 4 an einem Meßobjekt eingegeben. Dies kann bspw. eine Antastkraft von 20 mN sein. Immer wenn nun der inkrementale Drehgeber 37 einen Unterschied zum Inkrementalmaßstab 34 aufweist, bspw. 10 µm dann entspricht dies einer vorbestimmten Meßkraft. Dieser Wert wird auf einen Drehzahlregler 38 gegeben, wodurch eine Einregulierung des Meßtasters 4 auf die jeweils richtige Position erfolgt, in der die vorgegebene Meßkraft erreicht ist. Zu diesem Zweck ist der Meßkraftregler 35 bzw. 60 über die Leitung 39 mit einem Schalter 40 verbunden, welcher seinerseits die Verbindung zum Drehzahlregler 38 herstellt. Durch die Leitung 41 ist der Inkrementalmaßstab 34 sowohl mit dem Meßkraftregler 35 als auch mit einem Lageregler 42 verbunden. In den Lageregler ist ein Positions-Sollwert 43 eingebbar. Die jeweilige Motordrehzahl wird durch einen Tachometer 32 abgelesen. Dieser abgelesene Wert vom Tachometer 32 wird dem Drehzahlregler 38 über die Leitung 44 mitgeteilt. Eine weitere Verbindung besteht zwischen dem Lageregler 42 über den Schalter 40 und dem Drehzahlregler 38. Vom Drehzahlregler 38 aus erfolgt über einen Verstärker 45 mittels einer weiteren Leitung 46 ein Signal auf den Antriebsmotor 9, durch welchen das Stahlband 5 und dadurch der Meßschlitten 3 mit Meßtaster 4 in Bewegung gesetzt werden. Über das Stahlband 5 erfolgt wiederum die Beeinflussung auf die Meßkrafterzeugungseinheit 12 zur Erzeugung einer vorgegebenen Meßkraft.

Der Drehgeber 37 an der oberen Umlenkrolle 6 zählt im Positionierbetrieb synchron zum eigentlichen inkrementalen Meßsystem. Bei der Antastung wird umgeschaltet und der Meßkraftregler 35 bzw. 60 gibt den Sollwert für den Drehzahlregelkreis vor.

Die programmierbare Meßkraft entspricht nach dem Hookschen Gesetz einer Wegdifferenz zwischen dem inkrementalen Wegsystem und dem Drehgeber 37. Zur Erzielung der schwingungsfreien Wegdifferenz geht die Ausgangsgröße (Leitung 39) des Meßkraftreglers 35 bzw. 60 gegen Null. Der Schalter 40 ist als ein Betriebsartenumschalter zwischen den Betriebsarten

— Positionsregelung mittels Lageregler,

— Verfahren mit Joystick und

— Antastregelung

ausgebildet.

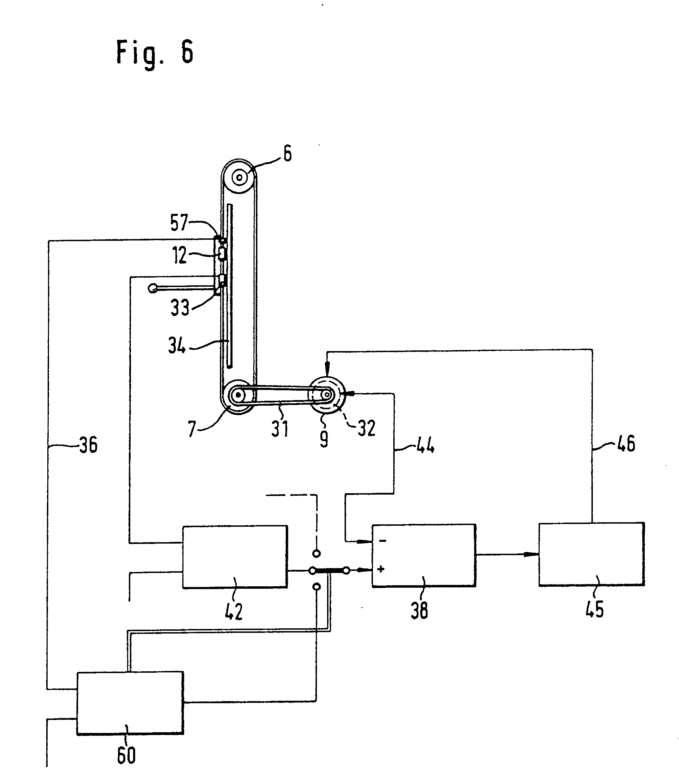

Alternativ dazu zeigt Fig. 6 den Meßkraftregler 60 in der Realisierung als einfache analoge Schaltung, wobei die Funktionsbausteine entsprechend der Fig. 5 in sinngemäßer Weise zur Anwendung kommen. Mit 57 ist hier ein Sensor bezeichnet. Der Kraftistwert wird in Fig. 6 indirekt über optische Sensoren erfaßt.

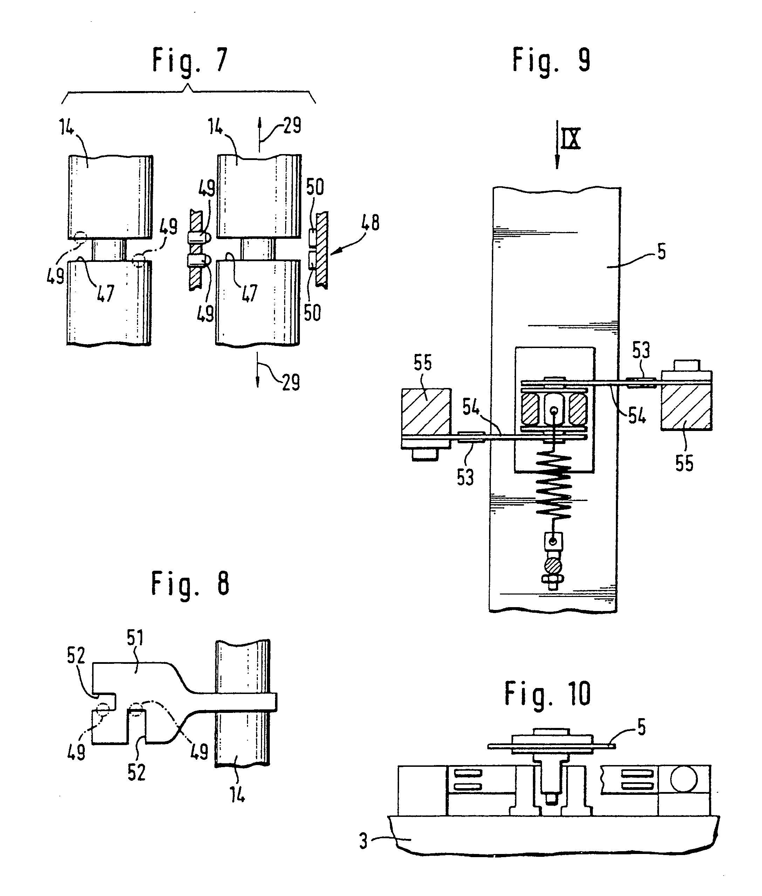

In den Figuren 7 bis 10 sind unterschiedliche Sensoreinrichtungen dargestellt.

Fig. 7 zeigt im Ausschnitt den Stößel 14 der Meßkrafterzeugungseinheit 12, welcher mit einer Ringnut 47 versehen ist.

Anstelle der Ringnut 47 kann hier selbstverständlich auch eine andere Ausnehmung am Stößel 14 vorgenommen sein. Ein optischer Sensor 48 ist mit zwei Lichtquellen 49 ausgerüstet, denen zwei auf gleicher Höhe angeordnete Fotozeilen 50 gegenüberliegen. Bei einer Auf- oder Abwärtsbewegung des Stößels in Richtung der Bewegungspfeile 29 erfolgt die Aufnahme der Lichtstrahlen aus den Lichtquellen durch die Fotozellen 50. Eine Verschiebung bewirkt, daß zumindest eine Lichtquelle 49 von eine gegenüberliegenden Fotozelle 50 nicht mehr erfaßt werden kann.

Durch die Steuerungseinheit 11 wird der Antriebsmotor 9 jeweils in Betrieb gesetzt, so daß der Stößel 14 in die vorgegebene Position gefahren wird, in welcher der optische Sensor voll wirksam ist.

Die beiden genannten optischen Sensoren 49 bis 53 arbeiten nach dem Schattenlichtverfahren. Die Schattenzunahme der beiden Sensorpaare ist gegenläufig, d.h., beim Verfahren des Stößels 14 in eine Richtung wird eine Fotozelle 50 abgedunkelt, während gleichzeitig die andere Fotozelle mehr belichtet wird. Die Differenz von beiden Sensorpaaren wird verstärkt und entsprechend bewertet.

Anstelle des optischen Sensors nach der Bauart in Fig. 6 kann auch eine Bauart gemäß Fig. 8 gewählt werden. Hier ist an dem Stößel 14 eine Fahne 51 befestigt, welche zwei Aussparungen 52 aufweist, welche der Aufnahme von Lichtquellen 49 dienen. Das Verfahren ist wieder entsprechend dem zu Fig. 7 beschriebenen Ablauf.

4

In den Figuren 9 und 10 sind sogenannte Dehnungsmesser-Sensoren 53 eingesetzt. Diese befinden sich auf Blattfedern 54, welche mit ihrem einen Ende jeweils am Stößel 14 befestigt sind, während das andere Ende ortsfest in einer Vorrichtung 55 gehalten ist.

## Patentansprüche

1. Höhenmeßgerät mit einem Ständer (1), an dem ein durch die Motorkraft eines Antriebsmotors (9) höhenverschiebbarer Meßschlitten (3) mit starr angebrachtem Meßtaster (4) angeordnet ist, welcher in Meßposition auf eine Meßstelle eine Meßkraft oder Antastkraft ausübt, wobei der Meßschlitten (3) an einem über eine obere oder/und untere Umlenkrolle (6, 7) geführten Antriebsübertragungselement (5) befestigt ist und unter der Wirkung einer Meßkrafterzeugungseinheit (12) steht, dadurch gekennzeichnet, daß die Meßkrafterzeugungseinheit (12) an dem Meßschlitten (3) vorgesehen ist und im Zusammenwirken mit einer Steuerungseinheit (11) des Antriebsmotors (9) eine wählbare konstant geregelte Meßkraft zwischen dem Meßtaster (4) und einer Meßstelle bewirkt und durch einen bezüglich des Meßschlittens (3) axial verschiebbaren Stößel (14) fest mit dem Antriebsübertragungselement (5) verbunden und in zwei durch ein Trennelement (21) voneinander getrennte Kammern (19, 20) aufgeteilt ist, denen jeweils eine sich beidendig axial abstützende, unabhängig voneinander wirkende Feder (25) zugeordnet ist.

2. Höhenmeßgerät nach Anspruch 1, dadurch gekennzeichnet, daß der Stößel (14) in einem Gehäuse (15) am bzw. im Meßschlitten (3) angeordnet ist, welches durch einen oberen und einen unteren Boden (17) fest verschließbar ist und im wesentlichen mittig der Längsachse des Stößels (14) das ringförmig um den Stößel (14) angeordnete Trennelement (21) aufweist, welches im Gehäuse (15) durch eine Schraubverbindung für eine begrenzte Einstellbarkeit in axialer Richtung gehalten ist und das Gehäuse (15) in eine obere und eine untere Kammer (19, 20) unterteilt, in denen sich die Federn (25) endseitig am Trennelement (21) und einem auf den Böden (17) aufliegenden Ring (18) abstützen.

3. Höhenmeßgerät nach einem der Ansprüche 1 oder 2, dadurch gekennzeichnet, daß der Stößel (14) an seinen beiden Enden außerhalb der Böden (17) des Gehäuses (15) jeweils eine Stellmutter (26) für einen Festanschlag aufweist.

4. Höhenmeßgerät nach Anspruch 1, dadurch gekennzeichnet, daß die Steuerungseinheit (11) des Antriebsmotors (9) aus einem Meßkraftregler (35, 60) und einem Lageregler (42) für den Meßtaster (4) mit zugeordnetem Drehzahlregler (38) und Verstärker (45) gebildet ist, die entsprechend der vorgebbaren Meßkraft des Meßtasters (4) auf eine Meßstelle und der Meßtasterposition auf den Antriebsmotor (9) wirken.

5. Höhenmeßgerät nach Anspruch 4, dadurch gekennzeichnet, daß der Meßkraftregler (35, 60) mit einem Sensor (57, 49, 53) zur direkten Aufnahme der Stößelbewegungen verbunden ist.

6. Höhenmeßgerät nach Anspruch 5, dadurch gekennzeichnet, daß zwei optische Sensoren (49) in Differentialanordnung vorgesehen sind, welche die Axialbewegung des Stößels (14) aus einer Stößelringnut (47) erfassen.

7. Höhenmeßgerät nach Anspruch 5, dadurch gekennzeichnet, daß zwei optische Sensoren (49) in Differentialanordnung vorgesehen sind, welche die Axialbewegung des Stößels (14) an einer am Stößel (14) befestigten Fahne (51) erfassen.

8. Höhenmeßgerät nach Anspruch 5, dadurch gekennzeichnet, daß ein Dehnungsmesser-Sensor (53) vorgesehen ist, der die Axialbewegung des Stößels (14) durch Veränderung von Dehnungsmessern erfaßt, die an Blattfedern (54) angebracht sind, welche an ihrem einen Ende fest in einer Vorrichtung (55) eingespannt sind und mit ihrem anderen Ende fest mit dem Stößel (14) verbunden sind.

9. Höhenmeßgerät nach Anspruch 4, dadurch gekennzeichnet, daß der Meßkraftregler (35) indirekt die Stößelbewegung über das Stahlband (5) durch einen Drehgeber (37) relativ zu einem linearen inkrementalen Meßsystem (33, 34) erfaßt.

10. Höhenmeßgerät nach Anspruch 2, dadurch gekennzeichnet, daß der Meßschlitten (3) zusammen mit dem Gehäuse (15) der Meßkrafterzeugungseinheit (12) aus einem Kohlefaser-Werkstoff gebildet ist.

11. Höhenmeßgerät nach einem der Ansprüche 1 oder 2, dadurch gekennzeichnet, daß die Lagerung des Meßschlittens (3) mit der Meßkrafterzeugungseinheit (12) am Ständer (1) wahlweise durch in der Schlittenwandung (56) festgelagerte oder/und angefederte Rollen (27,28) ausgebildet ist.

12. Höhenmeßgerät nach Anspruch 1, dadurch gekennzeichnet, daß als Antriebsübertragungselement (5) eine oben und unten kugelgelagerte Gewindestange oder Kugelumlaufspindel eingesetzt ist, während der Stößel (14) als drehgesicherte und gegen die Führung (2) abgestützte Mutter ausgebildet ist und der Antrieb der Gewindestange oder Kugelumlaufspindel über einen Zahnriemenantrieb erfolgt.

## Claims

1. A height-measuring device having a stand (1) on which is disposed a sliding measuring carriage (3) which is vertically displaceable by the motive force of a drive motor (9) and which has a rigidly mounted measuring feeler (4) which, when in the measuring position, exerts a measuring force or touch force on a measuring point, wherein the sliding measuring carriage (3) is secured to a drive transmission element (5) guided by way of an upper or/and lower guide pulley (6, 7) and is subjected to the action of a unit (12) for producing measuring force, characterised in that the unit (12) for producing measuring force is provided on the sliding measuring carriage (3) and, in cooperation with a control unit (11) of the drive motor (9), effects a selective, constantly regulated measuring force between the measuring feeler (4) and a measuring point and is rigidly connected to the drive transmission element (5) by a push rod (14) axially displaceable relative to the sliding measuring carriage (3), and is divided into two chambers (19, 20) which are separated from one another by a separating element (21) and each of which has a respective, associated spring (25) which supports itself axially at each end and acts independently of the other spring.

2. A height-measuring device as claimed in claim 1, characterised in that the push rod (14) is disposed in a housing (15) on or in the sliding measuring carriage (3), which housing is tightly closable by an upper and a lower base (17) and has, substantially in the centre of the longitudinal axis of the push rod (14), the separating element (21) which is disposed annularly around the push rod (14) and which is held in the housing (15) by a screw connection for limited adjustability in an axial direction and subdivides the housing (15) into an upper and a lower chamber (19, 20) in which the ends of the springs (25) are supported on the separating element (21) and a ring (18) supported on the bases (17).

3. A height-measuring device as claimed in one of the claims 1 or 2, characterised in that the push rod (14) has at each of its two ends outside the bases (17) of the housing (15) and an adjusting nut (26) for a positive stop.

4. A height-measuring device as claimed in claim 1, characterised in that the control unit (11) of the drive motor (9) is formed by a measuring force regulator (35, 36) and a position regulator (42) for the measuring feeler (4) with an associated rotational speed regulator (38) and amplifier (45), which, corresponding to the preterminable measuring force of the measuring feeler (4) acting upon a measuring point, and the position of the measuring feeler, act upon the drive motor (9).

5. A height-measuring device as claimed in claim 4, characterised in that the measuring force regulator (35, 60) is connected to a sensor (57, 49, 53) for direct detection of the movements of the push rod.

6. A height-measuring device as claimed in claim 5, characterised in that two optical sensors (49) in differential arrangement are provided and detect the axial movement of the push rod (14) from an annular groove (47) in the push rod.

7. A height-measuring device as claimed in claim 5, characterised in that two optical sensors (49) in differential arrangement are provided and detect the axial movement of the push rod (14) by a tag (51) secured to the push rod (14).

8. A heigh-measuring device as claimed in claim 5, characterised in that a strain gauge sensor (53) is provided and detects the axial movement of the push rod (14) by variation of strain gauges mounted on leaf springs (55) which are rigidly clamped in a device (55) at one end and rigidly connected to the push rod (14) at the other end.

9. A height-measuring device as claimed in claim 4, characterised in that the measuring force regulator (35) indirectly detects the movement of the push rod relative to a linear incremental measuring system (33, 34) by way of the steel belt by a rotary sensor (37).

10. A height-measuring device as claimed in claim 2, characterised in that the sliding measuring carriage (3), together with the housing (15) of the unit (12) for producing a measuring force, is formed from a carbon fibre material.

11. A height-measuring device as claimed in one of the claims 1 or 2, characterised in that the mounting of the sliding measuring carriage (3), with the unit (12) for producing a measuring force, on the stand (1) is optionally formed by rollers (27, 28) fixedly or/and resiliently mounted in the wall (56) of the carriage.

12. A heigh-measuring device as claimed in claim 1, characterised in that a screw-threaded rod running in ball bearings at the top and the bottom, or a ballscrew, is used as a drive transmission element (5), while the push rod (14) is in the form of a nut secured against rotation and supported against the guide (2), and the drive for the screw-threaded rod or spindle rotating in ball bearings is effected by way of a toothed belt drive.

EP 0 298 262 B1

**Revendications**

1. Appareil de mesure de la hauteur, avec un socle (1) sur lequel est disposé un coulisseau de mesure (3), déplaçable en hauteur par la force motrice d'un moteur d'entraînement (9), avec un palpeur de mesure (4) monté rigidement, qui, en position de mesure, exerce sur l'emplacement de mesure une force de mesure ou une force de palpage, le coulisseau de mesure (3) étant fixé sur un élément de transmission d'entraînement (5), guidé par l'intermédiaire d'un rouleau de renvoi supérieur ou/et inférieur (6, 7), et étant soumis à l'action d'une unité de production d'une force de mesure (12), caractérisé en ce que l'unité de production de force de mesure (12) est prévue sur un coulisseau de mesure (3) et, en coopération avec une unité de commande (11) du moteur d'entraînement (9), génère une force de mesure, réglée à une valeur choisie constante, entre le palpeur de mesure (4) et un emplacement de mesure, et est relié fermement à l'élément de transmission d'entraînement (5), grâce à un poussoir (14) déplaçable axialement par rapport au coulisseau de mesure (3), en étant subdivisé en deux chambres (19, 20), séparées l'une de l'autre par un élément de séparation (21), à chacune d'entre elle étant associé un ressort (25) prenant appui axialement des deux côtés et agissant indépendamment l'un de l'autre.

2. Appareil de mesure de la hauteur selon la revendication 1, caractérisé en ce que le poussoir (14) est disposé dans un boîtier (15) situé sur, ou dans le coulisseau de mesure (3), qui est obturable fermement grâce à un fond supérieur et à un fond inférieur (17) et présente, sensiblement au centre de l'axe longitudinal du poussoir (14), l'élément de séparation (21) disposé annulaire autour du poussoir (14) et maintenu dans le boîtier (15) grâce à une liaison filetée, pour obtenir une capacité de réglage limitée en direction axiale et subdivisant le boîtier (16) en une chambre supérieure et une chambre inférieure (19, 20), dans lesquelles les ressorts prennent appui, à une extrémité sur l'élément de séparation (21) et à l'autre sur une bague (18) reposant sur les fonds (17).

3. Appareil de mesure de la hauteur selon l'une des revendications 1 ou 2, caractérisé en ce que le poussoir (14) présente à chacune de ses deux extrémités un écrou de réglage (26) pour une butée fixe, extérieurement au fonds (17) du boîtier (15).

4. Appareil de mesure de la hauteur selon la revendication 1, caractérisé en ce que l'unité de commande (11) du moteur d'entraînement (9) est formée d'un régulateur de force de mesure (35, 60) et d'un régulateur de position (42), pour le palpeur de mesure (4), avec un régulateur de vitesse de rotation (38) et un amplificateur (45) associés, qui agissent sur le moteur d'entraînement (9), en fonction de la force de mesure prédéterminée du palpeur (4) en un emplacement de mesure et en fonction de la position du palpeur.

5. Appareil de mesure de la hauteur selon la revendication 4, caractérisé en ce que le régulateur de force de mesure (35, 60) est relié à un capteur (57, 49, 53) en vue d'enregistrer directement les déplacements du poussoir.

6. Appareil de mesure de la hauteur selon la revendication 5, caractérisé en ce que deux capteurs optiques (49) sont prévus suivant un agencement différentiel et mesurent le déplacement axial du poussoir (14), en partant d'une gorge annulaire de poussoir (47).

7. Appareil de mesure de la hauteur selon la revendication 5, caractérisé en ce que deux capteurs optiques (49) sont prévus, suivant un agencement différentiel, qui mesurent le déplacement axial du poussoir (14) sur une mire (51) fixée au poussoir (14).

8. Appareil de mesure de la hauteur selon la revendication 5, caractérisé en ce qu'est prévu un capteur de mesure extensométrique (53), qui mesure le déplacement axial du poussoir (14) grâce à la variation subie par des organes de mesure extensométriques, placés sur des ressorts à lame (54), qui sont fixés fermement, à l'une de leurs extrémités, dans un dispositif (55) et qui sont reliées fermement au poussoir (14), par leur autre extrémité.

9. Appareil de mesure de la hauteur selon la revendication 4, caractérisé en ce que le régulateur de force de mesure (35) procède à une mesure indirecte du déplacement du poussoir, par l'intermédiaire du ruban d'acier (5), grâce à un capteur de rotation (37), par rapport à un système de mesure (33, 34) à incrémentation linéaire.

10. Appareil de mesure de la hauteur selon la revendication 2, caractérisé en ce que le coulisseau de mesure (3) et le boîtier (15) de l'unité de production de force de mesure (12) sont formés d'un matériau à base de fibres de carbone.

11. Appareil de mesure de la hauteur selon l'une des revendications 1 ou 2, caractérisé en ce que le guidage du coulisseau de mesure (3), avec l'unité de production de force de mesure (12), sur le socle (1) est réalisé au choix grâce à des rouleaux (27, 28) montés fixes ou/et élastiquement dans la paroi de coulisseau (56).

12. Appareil de mesure de la hauteur selon la revendication 1, caractérisé en ce que l'élément de transmission d'entraînement (4) utilisé est une tige filetée pourvue en haut et en bas d'un palier sphérique ou d'une vis à bille, tandis que le poussoir (14) est réalisé sous forme d'un écrou bloqué en rotation et appuyé contre

7

le guidage (2), et l'entraînement de la tige filetée ou de la vis à bille s'effectuant par l'intermédiaire d'un entraînement à courroie crantée.

Fig. 1

6

2

13

3

4

12

13

5

7

1

8

30

Fig. 2

5

7

9

10

11

Fig. 3

**Fig. 4**

**Fig. 5**

Fig. 6

## Fig. 7

## Fig. 9

## Fig. 8

## Fig. 10